# FASCICULE DE BREVET EUROPEEN

(11) **EP 1 858 664 B1**
(45) Date de publication et mention de la délivrance du brevet: **13.11.2013**
(21) Numéro de dépôt: 06726065.3
(22) Date de dépôt: 10.03.2006
(51) Int. Cl.: B23B 27/14

(54) **OUTIL ET MACHINE POUR OPERATIONS D'USINAGE PRESENTANT UN RISQUE DE TRAVAIL À REBOURS**
WERKZEUG UND MASCHINE FÜR BEARBEITUNGSVORGÄNGE, DIE BEI INVERSBETRIEB EINE GEFAHR DARSTELLEN
TOOL AND MACHINE FOR MACHINING OPERATIONS POSING AN INVERSE OPERATION RISK

(30) Priorité: 17.03.2005 FR 0502650
(43) Date de publication de la demande: 28.11.2007
(73) Titulaire: ESSILOR INTERNATIONAL (Compagnie Générale d'Optique), 94220 Charenton le Pont (FR)
(72) Inventeur: GOURRAUD, Alexandre, F-94220 Charenton le Pont (FR)
(74) Mandataire: Lepelletier-Beaufond, François
(86) Numéro de dépôt international: PCT/FR2006/000534
(87) Numéro de publication internationale: WO 2006/097607

(56) Documents cités:
- EP-A- 1 449 616
- GB-A- 2 058 619
- JP-A- 10 043 903
- US-A- 3 871 092
- US-A- 4 552 491
- US-A- 6 120 570
- PATENT ABSTRACTS OF JAPAN vol. 1998, no. 06, 30 avril 1998 (1998-04-30) & JP 10 043903 A (SUMITOMO ELECTRIC IND LTD), 17 février 1998 (1998-02-17)

## Description

L'invention concerne le domaine de la fabrication de pièces par usinage.

Elle concerne plus particulièrement un outil et une machine pour opérations d'usinage présentant un risque de travail à rebours sur une pièce.

Un tel risque d'usinage à rebours est rencontré par exemple lors de la mise en oeuvre d'un procédé de tournage destiné à usiner sur une pièce entraînée en rotation autour d'un axe une surface qui, bien qu'elle soit transversale audit axe de rotation, est prismée au centre par rapport à cet axe de rotation.

En effet, lorsqu'une surface asymétrique doit être produite dans ces conditions, les procédés de tournage classique ne peuvent pas être employés dans la mesure où ils ne permettent l'usinage que de formes symétriques par rapport à l'axe de rotation de la pièce. On a alors recours à des procédés au cours desquels la pièce est entraînée en rotation tandis qu'un outil d'usinage est synchronisé avec la position angulaire de la pièce de manière à suivre la forme asymétrique qu'il doit usiner sur la pièce.

Les documents EP 1 449 616 et GB 2 058 619 décrivent un tel procédé.

Ces procédés permettent l'usinage d'une surface prismatique aux abords de l'axe de rotation de la pièce, c'est-à-dire que la normale à ladite surface au point d'intersection avec l'axe de rotation de la pièce forme un angle avec l'axe de rotation. Lorsque l'outil d'usinage approche l'axe de rotation de la pièce au cours de son travail, une portion de la matière à enlever nécessite qu'une portion de l'outil continue sa progression au-delà de l'axe de rotation de la pièce.

On constate ainsi la présence d'un volume résiduel, dénommé "téton", qui est enlevé en forçant l'outil à travailler par intermittence à rebours, c'est-à-dire avec un sens de déplacement relatif entre la pièce et l'outil qui est à l'opposé du sens de travail pour lequel l'outil a été prévu.

Il s'agit d'une utilisation impropre de l'outil qui peut entraîner son usure prématurée, voire un endommagement immédiat sous forme d'éclats apparaissant au niveau de l'arête de coupe de l'outil.

Le but de l'invention est d'améliorer ce type d'outil pour opérations d'usinage présentant un risque de travail à rebours.

A cet effet, l'invention vise un outil selon la revendication 1.

Un tel outil présente sur sa face d'attaque une facette inclinée qui ne modifie pas son comportement lors du travail nominal de l'outil. Le travail de l'outil est dit nominal lorsqu'il est effectué conformément à l'utilisation indiquée par le fabricant ou le cahier des charges de l'outil, c'est-à-dire selon le sens de déplacement relatif entre l'outil et la pièce pour lequel l'outil a été prévu. L'outil pénètre alors dans la matière par sa face d'attaque tandis que sa face de dépouille longe la matière fraîchement usinée sans provoquer de frottements supplémentaires.

En revanche, lors d'un travail à rebours de l'outil, la face de dépouille joue alors le rôle d'une face d'attaque en pénétrant dans la matière pour former un copeau tandis que la facette inclinée joue le rôle d'une face de dépouille.

Cette facette inclinée permet de plus de renforcer l'arête de coupe lorsqu'elle est sollicitée à rebours en transférant une partie des contraintes subies par l'arête sur la face d'attaque, ce qui permet une durée de vie de l'outil plus importante.

On notera que la demande de brevet japonais 10-43903 décrit un outil selon le préambule de la revendication 1 avec la facette inclinée, disposée entre la facette avant et la face de dépouille, qui est formée par un chanfrein d'une largeur comprise entre 0,5 et 2 µm ; alors que l'angle entre la direction de déplacement et la face de dépouille est compris entre 5 et 10°. Ce document est muet sur le risque de travail à rebours.

Selon une caractéristique préférée, la facette inclinée présente une hauteur rapportée dans le plan de la facette avant de l'ordre de 1 micromètre à 20 micromètres.

L'arête de coupe peut de plus s'étendre, au moins partiellement, selon un contour à géométrie conique et notamment selon un contour en arc de cercle dans le plan normal à ladite direction de déplacement relatif.

Par ailleurs, le rapport entre la hauteur de la facette inclinée rapportée dans le plan de la facette avant et la profondeur de passe pour laquelle l'outil est prévu est avantageusement inférieur ou égal à environ 20 %.

En ce qui concerne l'arête de coupe, celle-ci est avantageusement disposée entre la facette avant et la face arrière. De préférence l'arête de coupe est plus proche de la facette avant que de la face arrière.

L'outil peut être réalisé en diamant polycristallin ou en diamant monocristallin.

Selon un autre objet, l'invention vise une machine d'usinage adaptée à synchroniser la position d'un outil d'usinage tel que mentionné ci-dessus, avec la position angulaire d'une pièce entraînée en rotation autour d'un axe de rotation de sorte à usiner sur la pièce une surface asymétrique par rapport à l'axe de rotation.

Cette machine est avantageusement adaptée à usiner la pièce selon une profondeur de passe de l'ordre de 0,01 millimètre à 10 millimètres.

D'autres caractéristiques et avantages de l'invention apparaissent à la lumière de la description qui va suivre d'un mode de réalisation préféré donné à titre d'exemple non limitatif, description faite en référence aux dessins annexés dans lesquels :
- la figure 1 est une vue en perspective représentant schématiquement une machine d'usinage adaptée à déplacer un outil d'usinage pour qu'il coopère en tournage avec une pièce présentant une surface prismée au centre et entraînée en rotation.
- les figures 2 et 3 représentent un outil d'usinage de l'art antérieur, respectivement vu de profil et vu de face, pouvant être monté sur la machine de la figure 1 ;
- les figures 4 et 5 représentent schématiquement deux modes de travail de l'outil des figures 2 et 3, respectivement un mode nominal et un mode à rebours ;
- la figure 6 représente schématiquement l'outil de la figure 1 lorsqu'il travaille partiellement à rebours pendant le fonctionnement de la machine de la figure 1 ;
- les figures 7 et 8 représentent un outil d'usinage selon l'invention adapté à être monté sur la machine de la figure 1, respectivement vu de profil et vu de face ;
- les figures 9 et 10 sont des vues schématiques montrant l'outil des figures 7 et 8 de profil travaillant respectivement en mode nominal et à rebours ;
- les figures 11 et 12 représentent, à titre de comparaison avec les figures 9 et 10, deux outils de l'art antérieur travaillant en mode nominal.

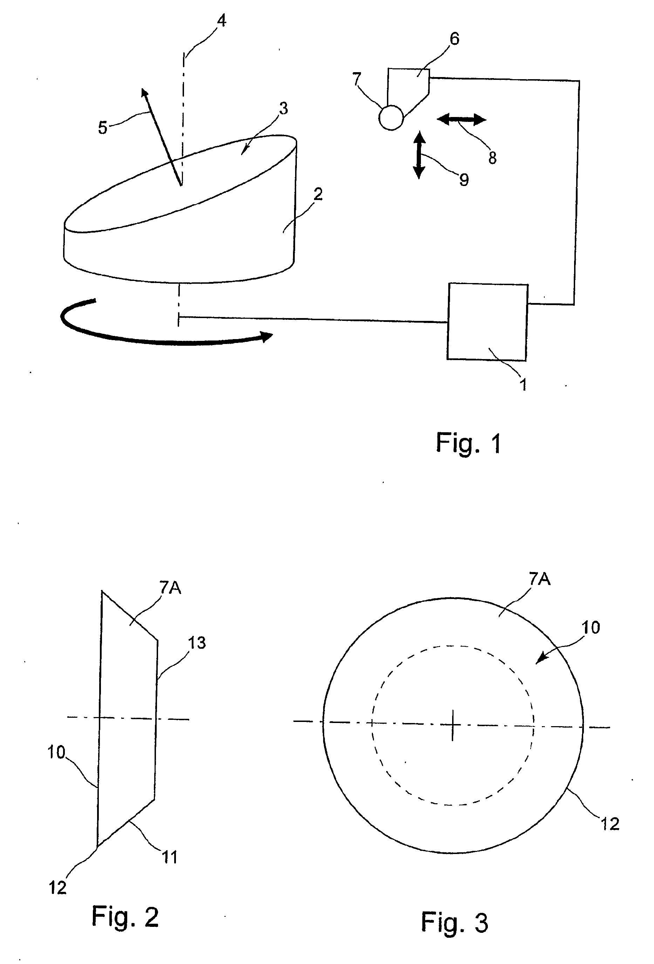

La machine d'usinage 1 représentée schématiquement à la figure 1 est adaptée à entraîner en rotation autour d'un axe 4 une pièce 2 cylindrique qui comporte une face prismatique 3. La pièce 2 étant prismatique, la normale 5 à la face 3 au point d'intersection avec l'axe 4 n'est pas parallèle à ce même axe 4.

La machine 1 commande également le déplacement selon les directions 8 et 9 d'un porte-outil 6 sur lequel est fixé un outil 7.

La machine 1 est adaptée à usiner grâce à l'outil 7 une surface selon une profondeur de passe constante sur la face prismatique 3. A cet effet, la machine 1 synchronise la position de l'outil 7 et la position angulaire de la pièce 2 selon la direction 9 pour suivre la forme de la face 3 et lui appliquer la profondeur de passe désirée, en plus de son mouvement d'avance selon la direction 8.

Les figures 2 et 3 représentent un outil 7A de l'art antérieur adapté à former l'outil 7 de la figure 1, respectivement vu de profil et vu de face (sur la figure 1, l'outil 7 est vu de face).

L'outil 7A est de forme générale circulaire et comporte une face d'attaque 10 et une face de dépouille 11 qui définissent toutes deux une arête de coupe 12, ainsi qu'une face arrière 13.

L'outil 7A est fixé au porte-outil 6 de la figure 1, par vissage ou par un quelconque moyen permettant de lier rigidement l'outil 7A et le porte-outil 6 de manière que l'arête de coupe 12 soit disponible sur au moins une partie de la circonférence de l'outil 7 pour l'usinage de la face prismatique 3.

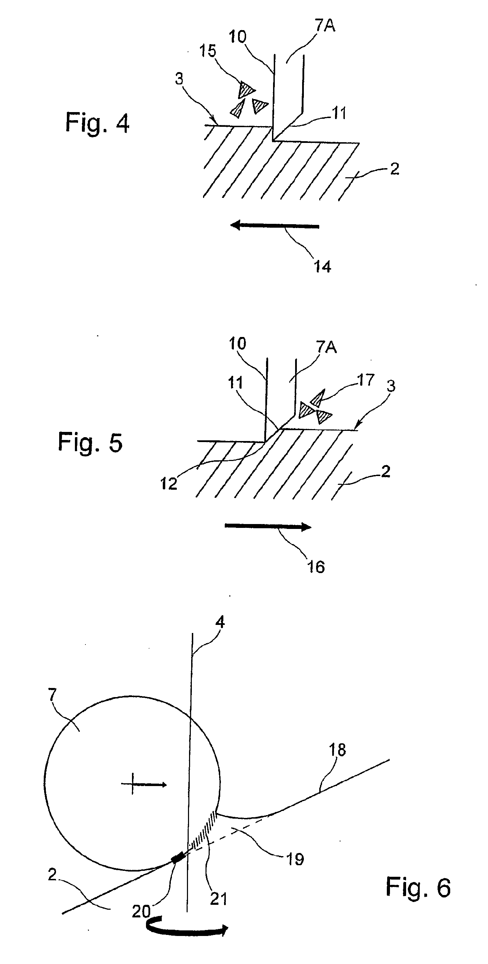

L'outil 7A de l'art antérieur est prévu pour travailler nominalement dans la situation représentée à la figure 4.

L'outil 7A pénètre dans la matière de la pièce 2 selon une profondeur de passe déterminée, l'outil 7A ayant un mouvement relatif par rapport à la pièce 2 indiqué par la flèche 14.

La face 3 est ainsi usinée, la face d'attaque 10 produisant des copeaux 15 par son avancée dans la matière.

La figure 5 représente en revanche l'outil 7A de l'art antérieur lorsqu'il travaille à rebours.

Le mouvement relatif de l'outil 7A par rapport à la pièce 2 étant dans le sens de la flèche 16, l'outil 7A soulève des copeaux 17 par l'avancée de sa face de dépouille 11 dans la matière.

Ce travail à rebours de l'outil 7A entraîne une usure prématurée de l'arête de coupe 12 ainsi que la formation d'éclats sur la face d'attaque 10, à proximité de l'arête de coupe 12.

La figure 6 donne l'exemple d'une situation dans laquelle l'outil 7 de la figure 1 est contraint de travailler à rebours lors de l'usinage de la face 3 de la pièce 2. Lors de ce travail à rebours, l'outil 7 est employé de la manière schématisée à la figure 5 pour l'outil 7A.

Cette figure 6 représente schématiquement l'outil 7 en cours d'usinage de la pièce 2 entraînée en rotation autour de l'axe 4, pour usiner une surface plane 18 selon une profondeur de passe constante sur la face prismatique 3.

L'outil 7 est en effet en train d'achever l'usinage de la surface 18 en enlevant un téton 19 de matière. Au cours de l'opération représentée, l'outil 7 est disposé à cheval sur l'axe de rotation 4 ce qui implique qu'au niveau de la ligne d'usinage 20 située d'un côté de l'axe 4, l'outil 7 travaille nominalement tandis que le long de la ligne d'usinage 21 située de l'autre côté de l'axe 4, l'outil 7 travaille à rebours sur le téton 19 de matière.

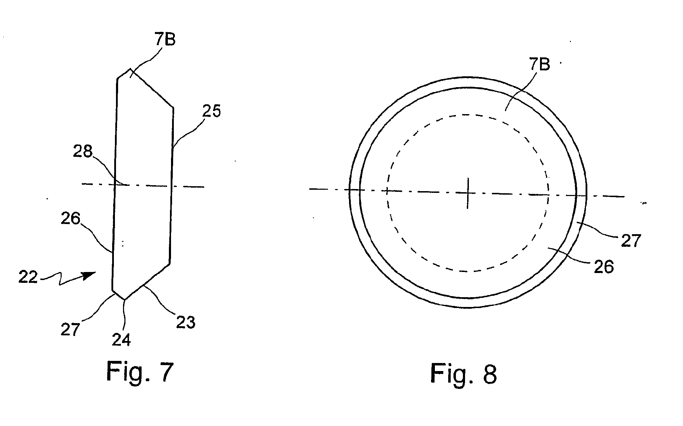

Pour améliorer le comportement d'un outil 7 dans la situation représentée en exemple à la figure 6, il est avantageux d'employer un outil 7B selon l'invention, représenté sur les figures 7 et 8.

Cet outil 7B présente une forme générale circulaire et comporte une face d'attaque 22 et une face de dépouille 23, toutes deux définissant à leur jonction une arête de coupe 24, ainsi qu'une face arrière 25.

La face d'attaque 22 comporte elle-même une facette avant 26 et une facette inclinée 27.

La facette avant 26 est sensiblement perpendiculaire à l'axe 28 traversant l'outil 7B (figure 7). L'outil 7B étant, dans le présent exemple, prévu pour travailler selon une direction de déplacement parallèle à cet axe 28, la facette avant 26 est donc prévue pour pénétrer dans la matière en étant transversale à la direction de déplacement relative entre l'outil 7B et la pièce 2.

La facette inclinée 27, quant à elle, forme un angle avec la facette avant 26 de sorte que, lorsque l'outil 7B travaille en mode nominal, la facette inclinée 27 se trouve dans une position inclinée vers l'arrière par rapport au sens de déplacement de l'outil 7B.

La facette inclinée 27 étant située à l'extrémité de la face d'attaque 22, l'arête de coupe 24 est définie par la jonction de cette facette inclinée 27 et de la face de dépouille 23. L'arête de coupe 24 est donc en arrière par rapport à l'arête de coupe 12 de l'outil 7A de l'art antérieur représenté aux figures 2 et 3.

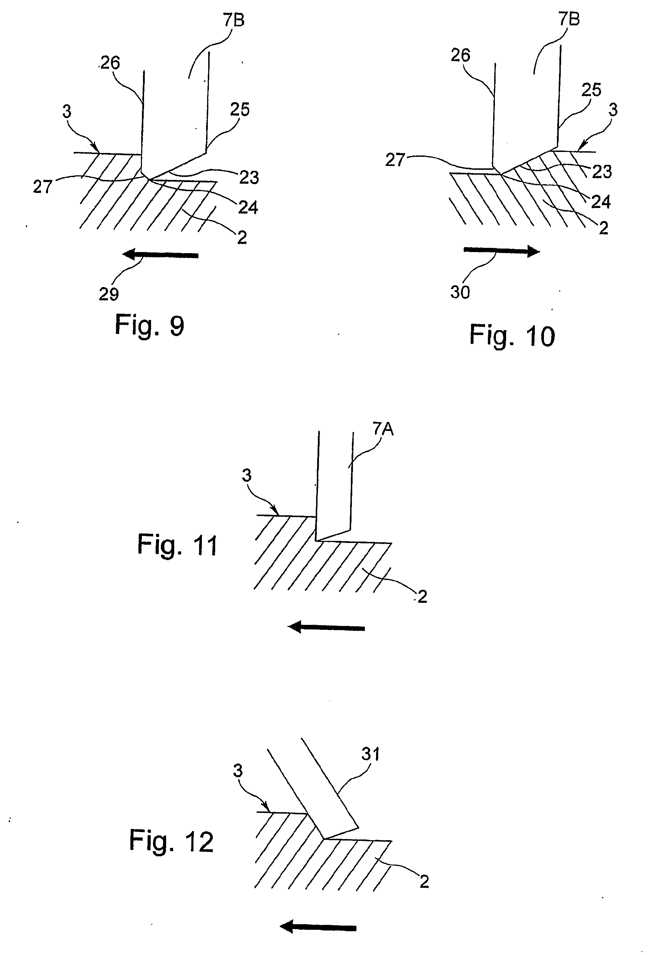

Les figures 9 et 10 représentent schématiquement le travail de l'outil 7B sur la pièce 2 lorsqu'il est monté sur la machine de la figure 1, respectivement dans le sens nominal et dans le sens à rebours.

Dans le sens nominal (figure 9), l'outil 7B attaque la face 3 de la pièce 2 avec sa facette avant 26 sensiblement transversale à la direction de déplacement relatif 29 entre l'outil 7B et la pièce 2.

Dans cette configuration, la hauteur de la facette inclinée 27 prise dans le plan de la facette avant 26 étant faible par rapport à la profondeur de passe, le comportement de l'outil 7B lors de son travail nominal est comparable au comportement de l'outil 7A de l'art antérieur représenté sur la figure 11.

De plus, le comportement de l'outil 7B lors de son travail nominal n'est pas comparable au comportement d'un outil 31 à angle de coupe négatif (figure 12).

En revanche, lorsque l'outil 7B travaille à rebours selon un déplacement relatif 30 (figure 10), la matière de la pièce 2 est attaquée par la face de dépouille 23 de l'outil 7B qui est dans la même disposition et qui se comporte comme la facette avant 26 lors du travail nominal. La face de dépouille 23 travaille alors en usinage tandis que la facette inclinée 27 forme un renfort de l'arête de coupe 24 et joue le rôle de la face de dépouille 23 lors du travail nominal de l'outil 7B.

Des variantes de réalisation du dispositif peuvent être envisagées sans pour autant sortir du cadre de l'invention. Notamment, l'outil 7B peut présenter une forme générale très différente de celle du présent exemple à condition qu'il prévoie une face d'attaque présentant une facette avant et une facette inclinée.

## Revendications

1. Outil (7B) pour opérations d'usinage, prévu pour travailler selon une direction de déplacement (29, 30) relatif entre la pièce (2) et l'outil (7B) lors desdites opérations d'usinage qui est parallèle à l'axe (28) traversant l'outil (7B), cet outil (7B) comportant une arête de coupe (24) située à la jonction entre une face d'attaque (22) et une face de dépouille (23), ainsi qu'une face arrière (25), dans lequel la face d'attaque (22) présente une facette avant (26) prévue pour être disposée sensiblement transversalement à l'axe (28) traversant l'outil (7B), et une facette inclinée (27) disposée entre la facette avant (26) et la face de dépouille (23), l'arête de coupe (24) étant située à la jonction entre la facette inclinée (27) de la face d'attaque (22) et la face de dépouille (23), **caractérisé en ce que** l'angle formé entre la face de dépouille (23) et l'axe (28) traversant l'outil (7B) est sensiblement égal à l'angle formé entre la facette inclinée (27) et l'axe (28) traversant l'outil (7B), grâce à quoi ledit outil convient à des opérations d'usinage présentant un risque de travail à rebours sur une pièce (2).

2. Outil selon la revendication 1, **caractérisé en ce que** la facette inclinée (27) présente une hauteur rapportée dans le plan de la facette avant (26) de l'ordre de 1 micromètre à 20 micromètres.

3. Outil selon l'une des revendications 1 et 2, **caractérisé en ce que** l'arête de coupe (24) s'étend au moins partiellement selon un contour à géométrie conique.

4. Outil selon l'une des revendications 1 à 3, **caractérisé en ce que** l'arête de coupe (24) s'étend selon un contour en arc de cercle dans le plan normal à ladite direction de déplacement (29, 30) relatif.

5. Outil selon l'une des revendications 1 à 4, **caractérisé en ce que** le rapport entre la hauteur de la facette inclinée (27) rapportée dans le plan de la facette avant (26) et la profondeur de passe pour laquelle l'outil (7B) est prévu est inférieur ou égal à environ 20 %.

6. Outil selon l'une des revendications 1 à 5, **caractérisé en ce que** l'arête de coupe (24) est disposée entre la facette avant (26) et la face arrière (25).

7. Outil selon la revendication 6, **caractérisé en ce que** l'arête de coupe (24) est plus proche de la facette avant (26) que de la face arrière (25).

8. Outil selon l'une des revendications 1 à 7, **caractérisé en ce qu'**il est réalisé en diamant polycristallin.

9. Outil selon l'une des revendications 1 à 7, **caractérisé en ce qu'**il est réalisé en diamant monocristallin.

10. Machine d'usinage adaptée à synchroniser la position d'un outil d'usinage (7B) selon l'une des revendications 1 à 9, avec la position angulaire d'une pièce (2) entraînée en rotation autour d'un axe de rotation (4) de sorte à usiner sur la pièce (2) une surface asymétrique par rapport à l'axe de rotation (4).

11. Machine selon la revendication 10, **caractérisée en ce qu'**elle est adaptée à usiner la pièce (2) selon une profondeur de passe de l'ordre de 0,01 millimètre à 10 millimètres.

## Patentansprüche

1. Werkzeug (7B) für Bearbeitungsvorgänge, das dazu vorgesehen ist, längs einer Relativverlagerungsrichtung (29, 30) zwischen dem Teil (2) und dem Werkzeug (7B) während der Bearbeitungsvorgänge, die zu der Achse (28), die durch das Werkzeug (7B) verläuft, parallel ist, zu arbeiten, wobei dieses Werkzeug (7B) eine Schneidkante (24), die sich an der Verbindung zwischen einer Angriffsfläche (22) und einer Freifläche (23) befindet, und eine hintere Fläche (25) aufweist, wobei die Angriffsfläche (22) eine vordere Fase (26), die vorgesehen ist, um im Wesentlichen transversal zu der das Werkzeug (7B) durchquerenden Achse (28) angeordnet zu werden, und eine geneigte Fase (27), die zwischen der vorderen Fase (26) und der Freifläche (23) angeordnet ist, aufweist, wobei sich die Schneidkante (24) an der Verbindung zwischen der geneigten Fase (27) der Angriffsfläche (22) und der Freifläche (23) befindet, **dadurch gekennzeichnet, dass** der Winkel, der zwischen der Freifläche (23) und der das Werkzeug (7B) durchquerenden Achse (28) gebildet wird, im Wesentlichen gleich dem Winkel ist, der zwischen der geneigten Fase (27) und der das Werkzeug (7B) durchquerenden Achse (28) ist, wodurch das Werkzeug für Bearbeitungsvorgänge geeignet ist, die eine Gefahr einer fehlerhaften Arbeit an einem Teil (2) bergen.

2. Werkzeug nach Anspruch 1, **dadurch gekennzeichnet, dass** die geneigte Fase (27) eine in der Ebene der vorderen Fase (26) hinzugefügte Höhe in der Größenordnung von 1 Mikrometer bis 20 Mikrometer aufweist.

3. Werkzeug nach einem der Ansprüche 1 und 2, **dadurch gekennzeichnet, dass** sich die Schneidkante (24) wenigstens teilweise längs eines Umrisses mit konischer Geometrie erstreckt.

4. Werkzeug nach einem der Ansprüche 1 bis 3, **dadurch gekennzeichnet, dass** sich die Schneidkante (24) längs eines Kreisbogenumrisses in der Ebene senkrecht zu der Relativverlagerungsrichtung (29, 30) erstreckt.

5. Werkzeug nach einem der Ansprüche 1 bis 4, **dadurch gekennzeichnet, dass** das Verhältnis zwischen der Höhe der geneigten Fase (27), die in der Ebene der vorderen Fase (26) hinzugefügt ist, und der Schnitttiefe, für die das Werkzeug (7B) vorgesehen ist, kleiner oder gleich etwa 20 % ist.

6. Werkzeug nach einem der Ansprüche 1 bis 5, **dadurch gekennzeichnet, dass** die Schneidkante (24) zwischen der vorderen Fase (26) und der hinteren Fläche (25) angeordnet ist.

7. Werkzeug nach Anspruch 6, **dadurch gekennzeichnet, dass** sich die Schneidkante (24) näher bei der vorderen Fase (26) als bei der hinteren Fläche (25) befindet.

8. Werkzeug nach einem der Ansprüche 1 bis 7, **dadurch gekennzeichnet, dass** es aus polykristallinem Diamant verwirklicht ist.

9. Werkzeug nach einem der Ansprüche 1 bis 7, **dadurch gekennzeichnet, dass** es aus monokristallinem Diamant verwirklicht ist.

10. Bearbeitungsmaschine, die dafür ausgelegt ist, die Position eines Bearbeitungswerkzeugs (7B) nach einem der Ansprüche 1 bis 9 mit der Winkelposition eines Teils (2), das rotatorisch um eine Drehachse (4) angetrieben wird, zu synchronisieren, derart, dass an dem Teil (2) eine in Bezug auf die Drehachse (4) asymmetrische Oberfläche bearbeitet wird.

11. Maschine nach Anspruch 10, **dadurch gekennzeichnet, dass** sie dafür ausgelegt ist, das Teil (2) mit einer Schnitttiefe in der Größenordnung von 0,01 Millimeter bis 10 Millimeter zu bearbeiten.

## Claims

1. Tool (7B) for machining operations adapted to work in a direction (29, 30) of relative movement between the workpiece (2) and the tool (7B) during said machining operations that is parallel to the axis (28) through the tool (7B), this tool (7B) comprising a cutting edge (24) located at the junction between a leading face (22) and a clearance face (23), and a rear face (25), wherein the leading face (22) has a front facet (26) adapted to be disposed substantially transversely to the axis (28) through the tool (7B) and an inclined facet (27) disposed between the front facet (26) and the clearance face (23), the cutting edge (24) being located at the junction between the inclined facet (27) of the leading face (22) and the clearance face (23), **characterized in that** the angle between the clearance face (23) and the axis (28) through the tool (7B) is substantially equal to the angle between the inclined facet (27) and the axis (28) through the tool (7B) so that said tool is suitable for machining operations with a risk of backward working on a workpiece (2).

2. Tool according to Claim 1, **characterized in that** the inclined facet (27) has a height projected into the plane of the front facet (26) of the order of 1 micrometre to 20 micrometres.

3. Tool according to any one of Claims 1 and 2, **characterized in that** the cutting edge (24) extends at least partially along a contour of conical geometry.

4. Tool according to any one of Claims 1 to 3, **characterized in that** the cutting edge (24) extends along a contour of circular arc shape in the plane normal to said direction (29, 30) of relative movement.

5. Tool according to any one of Claims 1 to 4, **characterized in that** the ratio between the height of the inclined facet (27) projected into the plane of the front facet (26) and the cut depth for which the tool (7B) is designed is less than or equal to approximately 20%.

6. Tool according to any one of Claims 1 to 5, **characterized in that** the cutting edge (24) is disposed between the front facet (26) and the rear face (25).

7. Tool according to Claim 6, **characterized in that** the cutting edge (24) is closer to the front facet (26) than to the rear face (25).

8. Tool according to any one of Claims 1 to 7, **characterized in that** it is made of polycrystalline diamond.

9. Tool according to any one of Claims 1 to 7, **characterized in that** it is made of monocrystalline diamond.

10. Machine tool adapted to synchronize the position of a machining tool (7B) according to any one of Claims 1 to 9 with the angular position of a workpiece (2) rotated about a rotation axis (4) so as to machine on the workpiece (2) a surface asymmetric with respect to the rotation axis (4).

11. Machine according to Claim 10, **characterized in that** it is suitable for machining the workpiece (2) according to a cut depth of approximately 0.01 millimetres to 10 millimetres.
